## Europäisches Patentamt

## European Patent Office

## Office européen des brevets

(11) Veröffentlichungsnummer: **0 056 797**
B1

# (12) EUROPÄISCHE PATENTSCHRIFT

(45) Veröffentlichungstag der Patentschrift:
18.12.85

(21) Anmeldenummer: 82890005.0

(22) Anmeldetag: 15.01.82

(51) Int. Cl.⁴: **F 24 J 3/00**

(54) Verfahren zum Herstellen eines Erdwärmespeichers und Erdwärmespeicher.

(30) Priorität: 16.01.81 AT 171/81

(43) Veröffentlichungstag der Anmeldung:
28.07.82 Patentblatt 82/30

(45) Bekanntmachung des Hinweises auf die Patenterteilung:
18.12.85 Patentblatt 85/51

(84) Benannte Vertragsstaaten:
BE CH DE FR GB IT LI NL

(56) Entgegenhaltungen:
EP - A - 0 017 783
DE - A - 2 715 499
NL - C - 67 820
US - A - 3 982 590
US - A - 4 094 356

V. ZIGNOLI: "Costruzione Editi", 1974, Unione tipografico-editrice Torinese, Torino (IT)
MACHINE DESIGN, Band 52, Nr.19, August 1980, Cleveland, Ohio (US), Dr. W.D. McBEE et al.: "Heat exchanger makes geothermal power more attractive", Seiten 92-93

(73) Patentinhaber: Pagany, Friedrich J., Dipl.Ing.,
Dobrastrasse 27, A-2346 Maria Enzersdorf (AT)

(72) Erfinder: Pagany, Friedrich J., Dipl.Ing., Dobrastrasse 27,
A-2346 Maria Enzersdorf (AT)

(74) Vertreter: Noske, Wolfgang, Dipl.-Ing.,
Hamerlinggasse 19, A-2340 Mödling (AT)

## Beschreibung

Die Erfindung betrifft einen Erdwärmespeicher und ein Verfahren zum Herstellen eines Erdwärmespeichers, wobei ein säulenartiger Wärmetauscher lotrecht in einer Bodenöffnung angeordnet wird.

Erdwärmespeicher dienen bekanntermassen dem Ausgleich der jahreszeitlichen Temperaturschwankungen in einem die natürliche Wärme, zumeist die Sonnenwärme, nutzenden Heizungssystem. Der Erdwärmespeicher kann entweder direkt oder über eine Wärmepumpe an einen Wärmetauscher, z.B. einen Sonnenkollektor, angeschlossen sein.

Die Herstellung eines Erdwärmespeichers erfolgt üblicherweise derart, dass in einer grösseren Gartenfläche ein mindestens 1,20 tiefer Aushub angelegt und dann auf dem Boden der Baugrube eine Schar von Wärmetauscherrohren aufgelegt wird. Die Ausdehnung der Baugrube muss in der gemässigten Klimazone etwa dem Inhalt des an das Heizungssystem angeschlossenen Gebäudes entsprechen. Es muss daher die Zerstörung einer grossen Gartenfläche in Kauf genommen werden. Die Baugrube wird dann wiederum mit dem Aushubmaterial gefüllt.

Aus der EP-A-17 783 ist eine Vorrichtung zur Nutzung von Erdwärme mit einem säulenartig in das Erdreich hineinragenden Rohrkörper bekannt. Der Rohrkörper besteht aus einem Aussenrohr und einem Innenrohr. Zwischen dem Innenrohr, welches am unteren Ende einen Überlauf aufweist und dem Aussenrohr ist ein Spülmantel gebildet. Das Innenrohr und der Spülmantel liegen in einem in sich geschlossenen Kreislauf einer Wärmepumpe, in welchem ein aufzuheizendes Medium fliesst. Die Herstellung der bekannten Vorrichtung erfolgt, indem jeweils ein einziger Rohrkörper im Wege einer Spülbohrung als verlorenes Bohrgestänge eingebracht wird. Die bekannte Vorrichtung kann vor allem als in grundwasserführende Schichten eintauchender Wärmetauscher, nicht jedoch als Erdwärmespeicher eingesetzt werden, da hiefür die Speichermasse zu gering wäre.

In der NL-C-67820 ist ein Verfahren zum Herstellen eines Erdwärmespeichers beschrieben, bei dem ein säulenartiger Wärmetauscher in Form eines U-Rohres in einem durch ein Mantelrohr ausgekleideten Bohrloch lotrecht angeordnet und dann das Bohrloch mit Schluff gefüllt wird. Nachteilig sind die Notwendigkeit des Mantelrohres und einer dichten Packung von Schluff im Mantelrohr, um einen ausreichenden Wärmeübergang sicherzustellen. Im Fall eines einzigen solchen Wärmetauschers wird der Wärmeverlust an das umgebende Erdreich gross sein; werden mehrere solche Wärmetauscher nebeneinander in der Erde angeordnet, sind entsprechend viele Bohrlöcher notwendig.

Der Erfindung liegt die Aufgabe zugrunde, einen Erdwärmespeicher bereitzustellen, welcher einfach ist und ohne Zerstörung einer grossen Gartenfläche auskommt.

Die Erfindung besteht bei einem Verfahren der eingangs genannten Art darin, dass die Bodenöffnung im Zuge der Herstellung mit einer Tonsuspension gefüllt wird und der Wärmetauscher danach in Form eines lotrechten Rohrbündels ohne an der Wand der Bodenöffnung anliegendes Mantelrohr in die suspensionsgestützte Bodenöffnung eingebracht wird und sodann unter teilweiser Verdrängung der Suspension Schüttmaterial in die Suspension der Bodenöffnung eingegeben wird. Der Erdwärmespeicher gemäss der Erfindung ist im Patentanspruch 2 dargelegt.

Ausgestaltungen des erfindungsgemässen Erdwärmespeichers ergeben sich aus den abhängigen Ansprüchen 3 und 4. Im Gegensatz zur Verfahrensweise bei der üblichen Schlitzwandbauweise, wobei in die durch eine Tonsuspension gestützte Baugrube Beton eingegeben wird, welcher die Tonsuspension vollständig verdrängt, verbleibt beim erfindungsgemässen Verfahren ein Teil der Tonsuspension in der Baugrube, wird dort vom Schüttmaterial aufgesaugt und verbessert den Wärmeübergang zwischen dem Rohrbündel und dem Schüttmaterial.

Beim erfindungsgemässen Verfahren genügt ein z.B. 6 bis 15 m tiefer, relativ kleinflächiger Aushub mit einem Querschnitt von z.B. 0,5 bis 5 m². Der Aushub kann mit Hilfe der beim Schlitzwandverfahren üblichen Grabgeräte oder durch Bohren hergestellt werden. Der Querschnitt des Aushubes beträgt nur $1/10$ bis $1/100$ des beim eingangs erwähnten bekannten Verfahren zum Herstellen eines Erdwärmespeichers mit horizontalen Wärmetauscherrohren nötigen Aushubquerschnittes. Auch die Menge des Aushubmateriales ist wesentlich geringer als bei diesem bekannten Verfahren, weil nicht so viel als Wärmespeicher unwirksame Deckschicht abgetragen zu werden braucht.

Der nach dem erfindungsgemässen Verfahren hergestellte Erdwärmespeicher mit einem lotrecht in einer Bodenöffnung säulenartig angeordneten Wärmetauscher weist vorzugsweise ein Bündel lotrechter Wärmetauscherrohre auf, welche ohne ein sie umhüllendes, an der Wand der Bodenöffnung anliegendes Mantelrohr mit dem umgebenden Erdboden über eine alle Wärmetauscherrohre des Bündels umhüllende Schicht verbunden sind, die aus einer Tonsuspension und Schüttmaterial besteht. Zweckmässig ist im Bündel der Wärmetauscherrohre ein an deren untere Enden angeschlossenes Sammelrohr zentral angeordnet, das als Zulauf für die wärmeübertragende Flüssigkeit ausgebildet ist. Die als Rücklauf für die wärmeübertragende Flüssigkeit ausgebildeten Wärmetauscherrohre des Bündels sind vorteilhaft im Querschnitt der Bodenöffnung aussen nahe der Wand der Bodenöffnung zentrisch symmetrisch angeordnet.

Das erfindungsgemässe Verfahren eignet sich besonders zum Herstellen eines Erdwärmespeichers in einer bestehenden Grünanlage.

Die Erfindung wird an Hand von in der Zeichnung dargestellten Ausführungsbeispielen nach dem erfindungsgemässen Verfahren hergestellter Erdwärmespeicher näher erläutert. Darin zeigt

Fig. 1 einen zylindrischen Erdwärmespeicher im Längsschnitt,

Fig. 2 den Erdwärmespeicher nach Fig. 1 im Querschnitt,

Fig. 3 einen Erdwärmespeicher mit rechteckigem Querschnitt und

Fig. 4 einen Erdwärmespeicher mit kreuzförmigem Querschnitt.

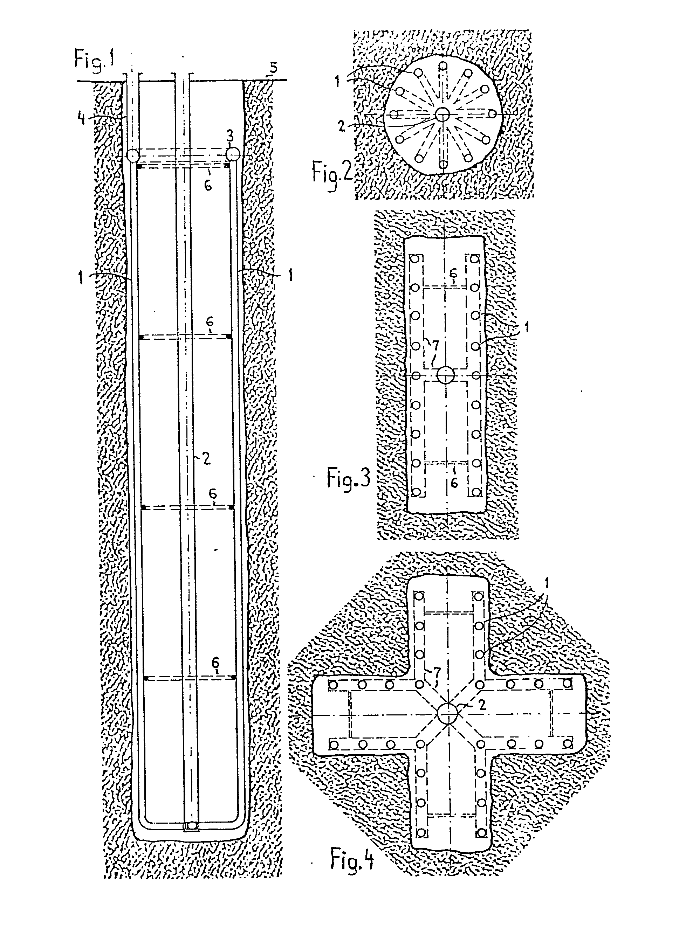

Bei dem Erdwärmespeicher nach den Fig. 1 und 2 sind die ein lotrechtes Rohrbündel bildenden Rohre 1 am Umfang eines Zylinders angeordnet. Die unteren Enden der Rohre 1 sind mit einem zentralen Sammelrohr 2 verbunden. Am oberen Ende münden die Rohre 1 in eine Ringleitung 3, die zu einem Sammelrohr 4 führt. Zwischen den Sammelrohren 2 und 4 kann eine wärmeübertragende Flüssigkeit im (oberhalb der Erdoberfläche 5 nicht dargestellten) Kreislauf geführt werden. Mit 6 sind einige horizontale Abstützungen bezeichnet.

Bei dem Erdwärmespeicher nach Fig. 3 sind die ein Rohrbündel bildenden Rohre 1 im Querschnitt entlang der einander gegenüberliegenden längeren Seiten eines Rechteckes angeordnet. Die Rohre 1 münden am unteren Ende über Sammelleitungen 7 in eine zentrale Sammelleitung 2 ein. Am oberen Ende sind die Rohre 1 in ähnlicher Weise zusammengefasst (nicht dargestellt). Mit 6 sind wiederum Abstützungen bezeichnet.

Bei dem Erdwärmespeicher nach Fig. 4 sind die lotrechten Rohre 1 des Rohrbündels aussen entlang eines kreuzförmigen Querschnittes angeordnet. Die unteren Enden des Rohre 1 sind über Sammelleitungen 7 mit dem zentralen Sammelrohr 2 verbunden. Über ein ähnliches – nicht dargestelltes – Sammelleitungssystem sind die oberen Enden der Rohre 1 verbunden. Abstützungen zwischen den Rohren 1 sind wieder mit 6 bezeichnet.

**Patentansprüche**

1. Verfahren zum Herstellen eines Erdwärmespeichers, wobei ein säulenartiger Wärmetauscher lotrecht in einer Bodenöffnung angeordnet wird, dadurch gekennzeichnet, dass die Bodenöffnung im Zuge der Herstellung mit einer Tonsuspension gefüllt wird und der Wärmetauscher danach in Form eines lotrechten Rohrbündels ohne an der Wand der Bodenöffnung anliegendes Mantelrohr in die suspensionsgestützte Bodenöffnung eingebracht wird, und sodann unter teilweiser Verdrängung der Suspension Schüttmaterial in die Suspension der Bodenöffnung eingegeben wird.

2. Erdwärmespeicher mit einem lotrecht in einer Bodenöffnung angeordneten säulenartigen Wärmetauscher, hergestellt nach dem Verfahren nach Anspruch 1, dadurch gekennzeichnet, dass er ein Bündel lotrechter Wärmetauscherrohre (1) aufweist, welche ohne ein sie umhüllendes, an der Wand der Bodenöffnung anliegendes Mantelrohr mit dem umgebenden Erdboden über eine alle Wärmetauscherrohre (1) des Bündels umhüllenden Schicht verbunden sind, die aus einer Tonsuspension und Schüttmaterial besteht.

3. Erdwärmespeicher nach Anspruch 2, dadurch gekennzeichnet, dass im Bündel der Wärmetauscherrohre (1) ein an das untere Ende der Wärmetauscherrohre (1) angeschlossenes Sammelrohr (2) zentral angeordnet ist, das als Zulauf für die wärmeübertragende Flüssigkeit ausgebildet ist.

4. Erdwärmespeicher nach Anspruch 2 oder 3, dadurch gekennzeichnet, dass die als Rücklauf für die wärmeübertragende Flüssigkeit ausgebildeten Wärmetauscherrohre (1) des Bündels im Querschnitt der Bodenöffnung aussen nahe der Wand der Bodenöffnung zentrisch symmetrisch angeordnet sind.

**Claims**

1. A process for the production of a geothermal reservoir with a columnar heat exchanger perpendicularly disposed in a soil orifice, characterized in that the soil orifice is filled with a clay suspension in the course of production and the heat exchanger is then inserted in the suspension-supported soil orifice in the form of a perpendicular nest of tubes without a jacket tube abutting the wall of the soil orifice and that bulk material is then introduced into the suspension of the soil opening under partial displacement of the suspension.

2. A geothermal reservoir with a columnar heat exchangerr perpendicularly disposed in a soil orifice, produced according to the process according to claim 1, characterized in that it is provided with a nest of perpendicular heat exchanger tubes (2) which are connected with the surrounding soil, without a jacket tube enveloping them and abutting the wall of the soil orifice, via a layer enveloping all the heat exchanger tubes (1) of the nest and consisting of a clay suspension and bulk material.

3. The geothermal reservoir according to claim 2, caracterized in that a collecting tube (2) formed as an inlet for the heat transferring liquid is centrally disposed in the nest of heat exchanger tubes (1) and connected to the lower end of the heat exchanger tubes (1).

4. The geothermal reservoir according to claim 2 or 3, characterized in that the heat exchanger tubes (1) of the nest which are formed as a runback for the heat transferring liquid are arranged centrically symmetrically in the cross section of the soil orifice outside close to the wall of the soil orifice.

**Revendications**

1. Procédé de fabrication d'un réservoir (accumulateur) géothermique, un échangeur thermique colonnaire étant disposé perpendiculairement dans un orifice du sol, caractérisé en ce que l'orifice du sol est rempli au cours de la fabrication d'une suspension d'argile et qu'après l'échangeur thermique est introduit dans l'orifice du sol supporté par la suspension d'argile en forme d'un faisceau perpendiculaire de tubes sans tube de protection adjacent à la paroi de l'orifice du sol et qu'après des matières en vrac sont introduites dans la suspension de l'orifice du sol sous déplacement partiel de la suspension.

2. Réservoir géothermique pourvu d'un échangeur thermique colonnaire disposé perpendiculairement dans un orifice du sol, fabriqué selon le procédé selon la revendication 1, caractérisé en ce qu'il est pourvu d'un faisceau de tubes (1) perpendiculaires d'échange thermique qui sont reliés, sans tube de protection enveloppant adjacent à la paroi de l'orifice du sol, par l'intermédiaire d'une couche enveloppant tous les tubes (1) d'échange thermique du faisceau et composée d'une suspension d'argile et de la matière en vrac.

3. Réservoir géothermique selon la revendication 2, caractérisé en ce qu'un tube collecteur (2) formant une arrivée pour le liquide caloporteur est disposé centralement dans le faisceau de tubes (1) d'échange thermique et relié à l'extrémité inférieure des tubes (1) d'échange thermique.

4. Réservoir géothermique selon la revendication 2 ou 3, caractérisé en ce que les tubes (1) d'échange thermique du faisceau qui sont réalisés en forme de reflux pour le liquide caloporteur sont disposés centrément symétriquement dans la section transversale de l'orifice du sol à l'extérieur proche à la paroi de l'orifice du sol.

Fig.1

Fig.2

Fig.3

Fig.4